# EUROPÄISCHE PATENTSCHRIFT

(11) **EP 0 633 153 B1**
(45) Veröffentlichungstag und Bekanntmachung des Hinweises auf die Patenterteilung: **25.01.1995**
(21) Anmeldenummer: 93115285.4
(22) Anmeldetag: 22.09.1993
(51) Int. Cl.: B60H 1/00, F24F 13/14, F16K 1/226

(54) **Verfahren zur Herstellung einer Heizungs- und/oder Klimaanlage mit einer an einer Gehäusewandung dichtend anliegenden Luftklappe, insbesondere für ein Kraftfahrzeug**
Process for producing a heating or air-conditioning device with a damper with a housing wall seal, in particular for a motor vehicule
Procédé de fabrication d'un dispositif de chauffage et/ou de climatisation avec un clapet à contact étanche avec la paroi du boîtier, en particulier pour un véhicule automobile

(43) Veröffentlichungstag der Anmeldung: 11.01.1995
(73) Patentinhaber: SIEMENS AKTIENGESELLSCHAFT, 80333 München (DE)
(72) Erfinder: Tauber, Werner, D-96257 Redwitz (DE)

(56) Entgegenhaltungen:
- DE-U- 8 535 924
- DE-U- 8 716 119
- DE-U- 8 911 657
- FR-A- 2 550 848

## Beschreibung

Die Erfindung bezieht sich auf ein Verfharen zur Herstellung einer Heizungs- und/oder Klimaanlage mit einer an einer Gehäusewandung dichtend anliegenden Luftklappe, insbesondere für ein Kraftfahrzeug, gemäß Patentanspruch 1.

Durch die DE-U-89 11 657 ist eine Heizungs- und/oder Klimaanlage für ein Kraftfahrzeug mit einer Luftklappe bekannt, bei der ein plattenförmiger Grundkörper von einem elastischen Dichtungsprofil aus einem thermoplastischen Elastomer umspritzt ist; in einer vorgesehenen Dichtungs-Endlage liegt die Klappe mit einer Dichtungslippe mit kreisförmigen Vollquerschnitt seitlich an einem ebenen Wandungsteil der Heizungs- und/oder Klimaanlage an.

Durch die DE-U-87 16 119 sind Luftklappen mit Dichtungsleisten bekannt, die in ihrer Erstreckungsrichtung verlaufende Hohlkörper aufweisen, die als schlauchartige Einzelteile über eine entsprechende randseitige Profilierung eines Grundkörpers aufgespannt sind.

Weiterhin ist bereits vorgeschlagen worden, an einen Grundkörper einer Luftklappe eine elastische Dichtungsleiste anzuspritzen, die einen in ihrer Erstreckungsrichtung verlaufenden, nach dem Gasinjektions-Verfahren hergestellten Hohlkörper aufweist und wiederum in Schließendstellungen dichtend an einem Wandungsteil seitlich anliegen.

Gemäß Aufgabe vorliegender Erfindung soll eine Heizungs- und/oder Klimaanlage mit einer Luftklappe geschaffen werden, die über ihren gesamten Schwenkbereich eine randseitig umlaufende Abdichtfunktion, insbesondere auch gegenüber gekrümmten Gehäusewandungen, auf einfache und geräuschfreie Weise gewährleisten kann. Die Lösung dieser Aufgabe gelingt durch die Lehre des Anspruchs 1; vorteilhafte Ausgestaltungen der Erfindung sind jeweils Gegenstand der Unteransprüche.

Die erfindungsgemäße Heizungs- und/oder Klimaanlage mit der speziellen umlaufenden Abdichtfunktion über den gesamten Schwenkbereich der Luftklappe kann mittels nur zweier Bearbeitungsvorgänge mit einem Dichtungs-Hohlprofil hergestellt werden, deren Wandstärken in einer Gieß- bzw. Spritzform im Sinne jeder gewünschten Elastizität genau profilierbar sind; dazu wird zweckmäßigerweise beim Spritzen in einer Gieß- bzw. Spritzform nicht nur das Dichtungs-Hohlprofil selbst genau profiliert sondern auch mit einem freien Ende an die in die Spritzform reichende Luftklappe, insbesondere in Form eines plattenförmigen Grundkörpers aus hartem Kunststoff, angespritzt; nach dem anschließenden Zwangsentformen des derartig profilierten Dichtungs-Hohlprofils kann dieses mit seinem anderen freien Ende unter Übergreifen des Randes des plattenförmiges Grundkörpers auf die andere Flächenseite des Grundkörpers auf einfache Weise aufgelegt und mechanisch befestigt werden.

Zur einfachen mechanischen Befestigung des anderen freien Endes des Dichtungs-Hohlprofils wird dieses mit umlaufenden mit randnahen Durchbrüchen versehen und auf korrespondierende, aus der anderen Flächenseite des plattenförmigen Grundkörpers vorstehende Fixierungsstifte aufgesteckt, die nach dem Aufstecken des freien Endes des Dichtungs-Hohlprofils niedergedrückt und breit verformt werden, derart daß eine entgegen der Aufschubrichtung auf die Fixierungsstifte formschlüssige Sicherung gewährleistet ist.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:
- FIG 1: Die Draufsicht auf den Grundkörper einer Luftklappe, die um eine Schwenkachse verschwenkbar ist und dabei über ihren gesamten Schwenkbereich mit einer randseitig umlaufenden Dichtnase an seitlichen und frontseitigen Gehäusewandungen dichtend anliegt;
- FIG 2: eine Seitenansicht der Luftklappe gemäß FIG 1;
- FIG 3: im Teilausschnitt aus FIG 1 in vergrößerter Darstellung das am Grundkörper randseitig gehaltende Dichtungs-Hohlprofil nach seiner Zwangsentformung;
- FIG 4: das Dichtungs-Hohlprofil gemäß FIG 3 nach dem Aufstecken des mit Durchbrüchen versehenen freien Endes auf die Fixierungsstifte des Grundkörpers;
- FIG 5: die formschlüssige Sicherung des Dichtungs-Hohlprofils durch Breitverformen der Fixierungsstifte gemäß FIG 4.

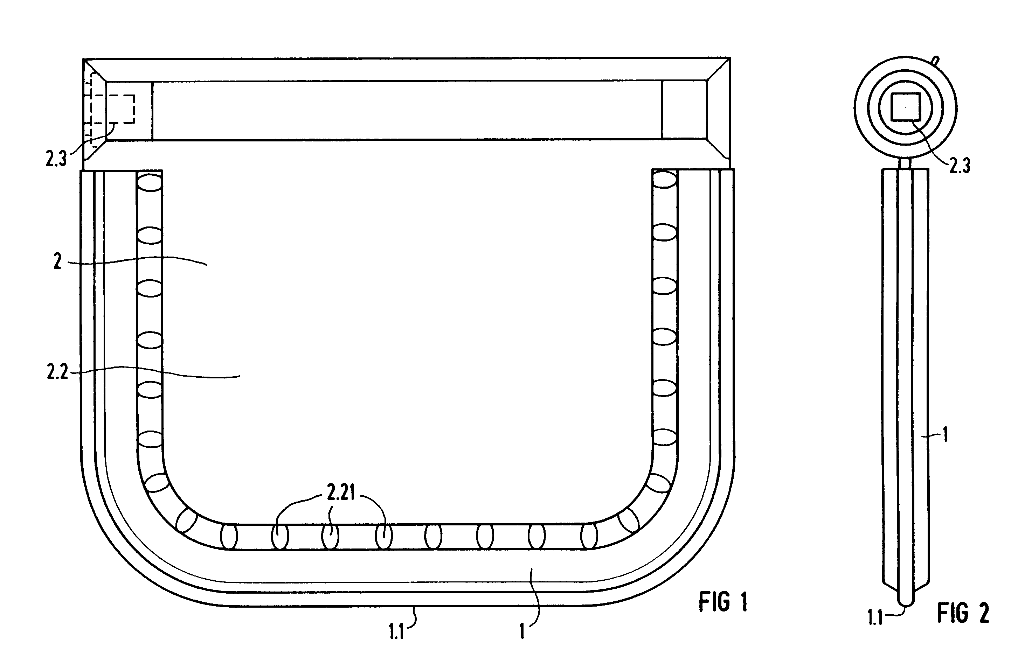

FIG 1 zeigt die Draufsicht auf eine Luftklappe 2, die um eine Schwenkachse 2.3 verschwenkbar ist und dabei z.B. in Anwendung als Frischluft-Umlauft-Luftklappe in einem Luftkanal während des gesamten Schwenkbereichs mit ihren Seitenflächen an ebenen Wandungen und mit ihrer Frontfläche an einer entsprechend dem Schwenkradius der Luftklappe 2 gekrümmten Gehäusewandung 3 mit einer randseitig umlaufenden Dichtnase 1.1 anliegt, die einstückiges Teil eines an einem Grundkörper 2 aus hartem Kunststoff angespritzten bzw. befestigten Dichtungs-Hohlprofils 1 aus einem thermoplastischen Elastomer ist.

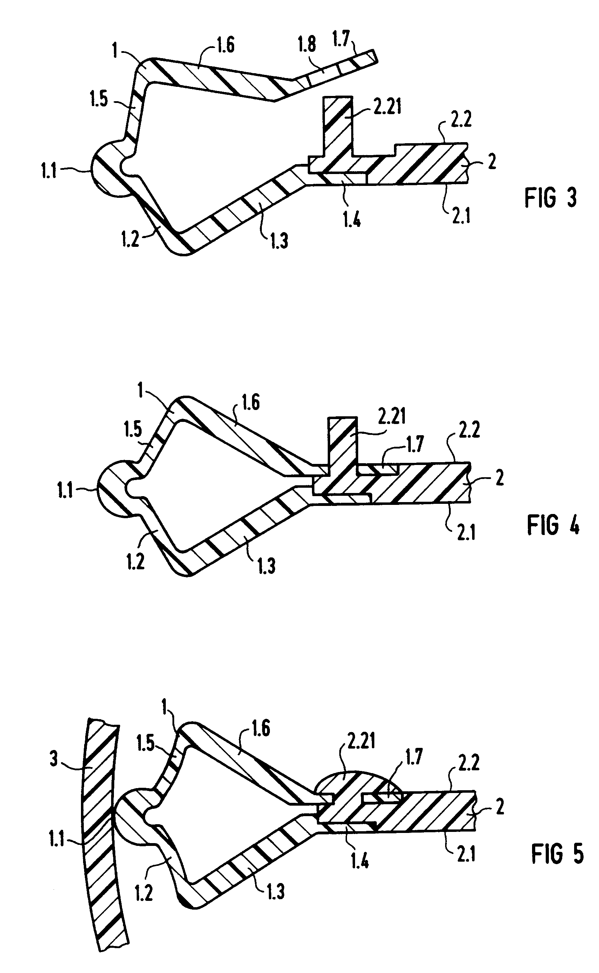

Wie insbesondere aus FIG 3 bis 5 ersichtlich, weist das Dichtungs-Hohlprofil 1 eine spezifische Profilierung derart auf, daß - wie insbesondere aus FIG 5 ersichtlich - die Dichtungsnase 1.1 bei der unter Vorspannung dichtenden Anlage an die gekrümmte frontseitige Gehäusewandung 3 ohne wesentliche Verformung des grundkörperseitigen Teils des Dichtungs-Hohlprofils 1 elastisch nachgiebig verformbar ist.

Dazu weist nach einer vorteilhaften Ausgestaltung der Erfindung das Dichtungs-Hohlprofil 1 jeweils zwei erste von der Dichtungsnase 1.1 unter ca. 60° gegenüber der Ebene der Flächenseiten 2.1;2.2 des Grundkörpers 2 ansteigende Wandteile 1.2 bzw. 1.5 und anschließend unter ca. 30° gegenüber der Ebene der Flächenseiten abfallende zweite Wandteile 1.3 bzw. 1.6 derart auf, daß die ersten Wandteile 1.2 bzw. 1.5 aufgrund gegenüber den zweiten Wandteilen 1.3 bzw. 1.6 geringerer Wandstärken gemäß der Betriebsandruckslage nach FIG 5 elastisch verformbarer sind als die zweiten Wandteile 1.3 bzw. 1.6.

In vorteilhafter Weise ist das Dichtungs-Hohlprofil 1 mit seinem einen, an den zweiten Wandteil 1.3 anschließenden freien Enden 1.4 an die eine Flächenseite 2.1 des Grundkörpers 2 angespritzt während das andere, an den anderen zweiten Randteil 1.6 anschließende freie Ende 1.7 mit entlang der Randflächen verteilten Durchbrüchen 1.8 auf entsprechend randseitig verteilte gegenüber der anderen Flächenseite 3.2 des Grundkörpers 2 vorstehende Fixierungsstifte 2.21 gemäß FIG 4 aufgesteckt und gemäß FIG 5 durch Breitdrücken, vorzugsweise durch Wärmeschweißen, der Enden der Fixierungsstifte 2.21 entgegen der Aufsteckrichtung formschlüssig fixiert sind.

In vorteilhafter Weise erfolgt das Anspritzen des einen freien Endes 1.4 des Dichtungs-Hohlprofils 1 an die eine Flächenseite 2.1 des Grundkörpers 2 in der gleichen Spritz- bzw. Gießform, in der gleichzeitig auch das gesamte Dichtungs-Hohlprofil 1 geformt wird; durch Zwangsentformung aufgrund des noch nicht mit dem Grundkörper 2 verbundenden anderen freien Endes 1.7 ist das Dichtungs-Hohlprofil 1 aus der Spritz- bzw. Gießform herausnehmbar und in einem einfachen zweiten Arbeitsgang - wie zuvor dargestellt - auf die anderen Flächenseite 2.2 des Grundkörpers 2 aufsteckbar und fixierbar.

## Patentansprüche

1. Verfahren zur Herstellung einer Heizungs- und/oder Klimaanlage mit einer an einer Gehäusewandung (3) dichtend anliegenden Luftklappe (1;2), insbesondere für ein Kraftfahrzeug, bestehend zumindest aus einem im wesentlichen plattenförmigen Grundkörper (2) mit einem randseitigen gummieleastischen Dichtungs-Hohlprofil (1) gekennzeichnet durch die folgenden Verfahrensschritte:
a) Das Dichtungs-Hohlprofil (1) wird mit jeweils zwei, von einer zur dichtenden Anlage an der Gehäusewandung (3) vorgesehenen Dichtungsnase (1.1) unter Bildung des Dichtungs-Hohlprofils (1) ausgehenden, in jeweils freien Enden 1.4 bzw. 1.7 mündenden Wandteilen (1.2-1.4 bzw. 1.5-1.7) mit spezifisch profilierter Wandstärke in einer Gieß- bzw. Spritzform gespritzt;
b) das der Dichtungsnase (1.1) abgewandte freie Ende (1.4) des einen Wandteils (1.2-1.4) wird auf die eine Flächenseite (2.1) des plattenförmigen Grundkörpers (2) randseitig aufgespritzt;
c) das der Dichtungsnase (1.1) abgewandte freie Ende (1.7) des anderen Wandteils (1.5-1.7) wird anschließend auf die andere Flächenseite (2.2) des Grundkörpers (2) randseitig aufgelegt und mechanisch befestigt.

2. Verfahren nach Anspruch 1 dadurch gekennzeichnet, daß das Dichtungs-Hohlprofil (1) in einem ersten Arbeitsgang in der Gieß- bzw. Spritzform geformt sowie mit dem freien Ende des einen Wandteils (1.2-1.4) auf die eine Flächenseite (2.1) des Grundkörpers (2) aufgespritzt und anschließend zwangsentformt wird.

3. Verfahren nach Anspruch 1 oder 2 dadurch gekennzeichnet, daß das Dichtungs-Hohlprofil (1) aus einem formgespritzten thermoplastischen Elastomer gespritzt wird.

4. Verfahren nach einem der Ansprüche 1-3 dadurch gekennzeichnet, daß das andere Wandteil (1.5-1.7) des Dichtungs-Hohlprofils (1) an seinem freien Ende (1.7) mit randnahen Durchbrüchen (1.8) auf korrespondierende, aus der anderen Flächenseite (2.2) des, vorzugsweise aus einem harten Kunststoff bestehenden, plattenförmigen Grundkörpers (2) vorstehende Fixierungsstifte (2.21) aufgesteckt wird.

5. Verfahren nach Anspruch 4 dadurch gekennzeichnet, daß die Fixierungsstifte (2.21) über das aufgesteckte freie Ende (1.7) im Bereich der Durchbrüche (1.8), vorzugsweise durch Wärmeschweißen, im Sinne einer formschlüssigen Fixierung in Gegenaufsteckrichtung des freien Endes (1.7) niedergedrückt und breitverformt werden.

6. Verfahren nach einem der Ansprüche 1-5 dadurch gekennzeichnet, daß zumindest die frontseitige Gehäusewandung (3) im Sinne einer während einer Schwenkbewegung des Grundkörpers (2) um seine Schwenkachse (2.3) dichtenden Anlage der, vorzugsweise in Richtung der Flächen (2.1;2.2) des plattenförmigen Grundkörpers (2) ausgebildeten, Dichtungsnase (1.1) gekrümmt ausgebildet wird.

7. Verfahren nach einem der Ansprüche 1-6 dadurch gekennzeichnet, daß das Hohlraum-Dichtungsprofil (1) in dem einen und dem anderen Wandteil mit einem ersten, von der Dichtungsnase (1.1) ausgehenden, unter ca. 60° gegenüber den Flächenseiten (2.1;2.2) des plattenförmigen Grundkörpers (2) ansteigenden ersten Wandteil (1.2 bzw. 1.5) und jeweils einem anschließenden, unter ca. 30° gegenüber den Flächenseiten (2.1;2.2) des plattenförmigen Grundkörpers (2) wieder abfallenden, in das am Grundkörper (2) befestigte freie Ende (1.4 bzw. 1.7) übergehenden zweiten Wandteil (1.3;1.6) geformt wird.

8. Verfahren nach Anspruch 7 dadurch gekennzeichnet, daß der erste Wandteil (1.2 bzw. 1.5) jeweils, insbesondere aufgrund verringerter Wandstärke, mit einer im Sinne eines elastischen Anlageausgleichs der Dichtungsnase (1.1) an der Gehäusewandung (3), elastischen Nachgiebigkeit im Vergleich zur andrucksteiferen Auslegung der Wandstärke des jeweils anderen Wandteils (1.3 bzw. 1.6) geformt wird.

9. Verfahren nach einem der Anprüche 1-8 dadurch gekennzeichnet, daß das Dichtungs-Hohlprofil (1), vorzugsweise an den der Schwenkachse (2.3) des plattenförmigen Grundkörpers (2) nahen Enden, mit außenseitige Öffnungen versehen wird.

10. Verfahren nach einem der Ansprüche 1-9 dadurch gekennzeichnet, daß die Luftklappe als Frischluft-Umluft-Luftklappe in einer Heizungs- bzw. Klimaanlage eines Kraftfahrzeuges ausgebildet wird.

## Claims

1. Process for producing a heating and/or air conditioning device with a damper (1; 2) sealingly abutting a housing wall (3), especially for a motor vehicle, comprising at least a substantially plate-shaped base body (2) with a marginal rubber-elastic sealing hollow section (1) characterized by the following process steps:
a) the sealing hollow section (1) is injected with in each case two wall portions (1.2-1.4 and 1.5-1.7 respectively) which proceed from a sealing lug (1.1) provided for sealing abutment against the housing wall (3), with the formation of the sealing hollow section (1) and which open in each case in free ends 1.4 and 1.7 respectively, with specifically profiled wall thickness, in a casting or injection mould;
b) that free end (1.4) of the one wall portion (1.2-1.4) which faces away from the sealing lug (1.1) is injected onto the one surface side (2.1) of the plate-shaped base body (2) at the margin;
c) that free end (1.7) of the other wall portion (1.5-1.7) which faces away from the sealing lug (1.1) is subsequently laid onto the other surface side (2.2) of the base body (2) at the margin and mechanically secured.

2. Process according to Claim 1, characterized in that in a first working step the sealing hollow section (1) is moulded in the casting or injection mould and is injected with the free end of the one wall portion (1.2-1.4) onto the one surface side (2.1) of the base body (2) and is subsequently forcibly demoulded.

3. Process according to Claim 1 or 2, characterized in that the sealing hollow section (1) is injected from an injection-moulded thermoplastic elastomer.

4. Process according to one of Claims 1-3, characterized in that the other wall portion (1.5-1.7) of the sealing hollow section (1) is fitted at its free end (1.7), by margin-proximate passages (1.8), onto corresponding fixing pins (2.21) projecting out of the other surface side (2.2) of the plate-shaped base body (2) which preferably comprises a hard plastic material.

5. Process according to Claim 4, characterized in that the fixing pins (2.21) are pressed down and spread out over the fitted-on free end (1.7) in the region of the passages (1.8), preferably by heat welding, in the sense of a positive fixing in the counter-fit-on direction of the free end (1.7).

6. Process according to one of Claims 1-5, characterized in that at least the front-side housing wall (3) is designed to be curved in the sense of an abutment, sealing during a pivotal movement of the base body (2) about its pivot axis (2.3), of the sealing lug (1.1) which is preferably designed in the direction of the surfaces (2.1; 2.2) of the plate-shaped base body (2).

7. Process according to one of Claims 1-6, characterized in that the cavity sealing section (1) is moulded in the one and the other wall portion with a first wall portion (1.2 and 1.5 respectively) which proceeds from the sealing lug (1.1) and which rises at approximately 60° in relation to the surface sides (2.1; 2.2) of the plate-shaped base body (2) and in each case one adjoining second wall portion (1.3; 1.6) which falls again at approximately 30° in relation to the surface sides (2.1; 2.2) of the plate-shaped base body (2) and which merges into the free end (1.4 and 1.7 respectively) secured to the base body (2).

8. Process according to Claim 7, characterized in that the first wall portion (1.2 and 1.5 respectively) is moulded in each case, especially on account of reduced wall thickness, with a yieldability, which is elastic in the sense of an elastic abutment compensation of the sealing lug (1.1) at the housing wall (3), in comparison with the more pressure-rigid design of the wall thickness of the respective other wall portion (1.3 and 1.6 respectively).

9. Process according to one of Claims 1-8, characterized in that the sealing hollow section (1) is provided, preferably at the ends close to the pivot axis (2.3) of the plate-shaped base body (2), with outside openings.

10. Process according to one of Claims 1-9, characterized in that the damper is designed as fresh air-return air damper in a heating or air conditioning device of a motor vehicle.

## Revendications

1. Procédé pour fabriquer une installation de chauffage et/ou de climatisation comportant un volet de circulation d'air (1;2) qui s'applique de façon étanche contre une paroi (3) d'un boîtier, notamment pour un véhicule automobile, et constitué au moins par un corps de base (2) sensiblement en forme de plaque et un profilé creux marginal d'étanchéité (1) présentant l'élasticité du caoutchouc, caractérisé par les étapes opératoires suivantes :
a) on forme par moulage par injection, dans un moule de coulée ou d'injection, le profilé creux d'étanchéité (1) comportant respectivement deux éléments de paroi (1.2-1.4 ou 1.5-1.7) qui possèdent une épaisseur de paroi à profil spécifique et s'étendent à partir d'un bec d'étanchéité (1.1) destiné à s'appliquer de façon étanche contre la paroi (3) du boîtier, en formant le profilé creux d'étanchéité (1) et qui se terminent par des extrémités libres (1.4 ou 1.7);
b) on moule par injection l'extrémité libre (1.4), tournée à l'opposé du bec d'étanchéité (1.1), d'un élément de paroi (1.2-1.4), du côté du bord, sur une face plane (2.1) du corps de base en forme de plaque (2);
c) on applique ensuite l'extrémité libre (1.7), tournée à l'opposé du bec d'étanchéité (1.1), de l'autre élément de paroi (1.5-1.7) au niveau du bord sur l'autre face plane (2.2) du corps de base (2) et on l'y fixe mécaniquement.

2. Procédé suivant la revendication 1, caractérisé par le fait qu'on moule le profilé creux d'étanchéité (1) lors d'une première étape opératoire dans le moule de coulée ou de moulage par injection et on le moule par injection avec l'extrémité libre de l'élément de paroi (1.2-1.4) sur une face plane (2.1) du corps de base (2) et ensuite on le démoule à force.

3. Procédé suivant la revendication 1 ou 2, caractérisé par le fait qu'on moule par injection le profilé d'étanchéité (1) en utilisant un élastomère thermoplastique moulé par injection.

4. Procédé suivant l'une des revendications 1-3, caractérisé par le fait qu'on emmanche l'autre élément de paroi (1.5-1.7) du profilé creux d'étanchéité (1) au niveau de son extrémité libre (1.7), au moyen de passages traversants (1.8) proches du bord, sur des tiges de fixation correspondantes (2.21), qui sont constituées par l'autre face plane (2.2) du corps de base en forme de plaque (2), constitué de préférence par une matière plastique dure.

5. Procédé suivant la revendication 4, caractérisé par le fait qu'on comprime et on déforme en largeur les tiges de fixation (2.21) sur l'extrémité libre enfichée (1.7) dans la zone des passages traversants (1.8), de préférence par soudage thermique, pour l'obtention d'une fixation, selon une liaison par formes complémentaires, dans la direction d'enfichage antagoniste de l'extrémité libre (1.7).

6. Procédé suivant l'une des revendications 1-5, caractérisé par le fait qu'on donne une forme cintrée au moins à la paroi frontale (3) du boîtier dans le sens d'une application, qui est étanche pendant un mouvement de basculement du corps de base (2) autour de son axe de basculement (2.3), du bec d'étanchéité (1.1) formé de manière à s'étendre de préférence en direction des surfaces (2.1;2.2) du corps de base en forme de plaque (2).

7. Procédé suivant l'une des revendications 1-6, caractérisé par le fait qu'on forme le profilé d'étanchéité creux (1) de manière qu'il comporte des premier et second éléments de paroi, comprenant un premier élément de paroi (1.2 ou 1.5), qui fait saillie à partir du bec d'étanchéité (1.1) et remonte sous un angle d'environ 60° par rapport aux faces planes (2.1;2.2) du corps de base en forme de plaque (2), et respectivement un second élément de paroi qui se raccorde au précédent, se rabat à nouveau en faisant un angle d'environ 30° par rapport aux faces planes (2.1;2.2) du corps de base en forme de plaque (2) et se prolonge par l'extrémité libre (1.4 ou 1.7) qui est fixée au corps de base (2).

8. Procédé suivant la revendication 7, caractérisé par le fait qu'on forme le premier élément de paroi (1.2 ou 1.5) respectivement, notamment sur la base d'une épaisseur de paroi réduite, de manière qu'elle présente, dans le sens d'une compensation élastique d'application du bec d'étanchéité (1.1) contre la paroi (3) du boîtier, une déformabilité élastique par rapport à l'épaisseur de paroi, qui fournit une meilleure résistance à la pression, de l'autre élément de paroi respectif (1.3 ou 1.6).

9. Procédé suivant l'une des revendications 1-8, caractérisé par le fait que le profilé creux d'étanchéité (1) comporte des ouvertures extérieures, de préférence au niveau des extrémités qui sont proches de l'axe de basculement (2.3) du corps de base en forme de plaque (2).

10. Procédé suivant l'une des revendications 1-9, caractérisé par le fait que le volet de circulation d'air est réalisé sous la forme d'un volet de circulation d'air frais - recirculation d'air dans une installation de chauffage ou de climatisation d'un véhicule automobile.
